# FASCICULE DE BREVET EUROPEEN

(11) **EP 2 362 028 B1**
(45) Date de publication et mention de la délivrance du brevet: **16.10.2013**
(21) Numéro de dépôt: 11155807.8
(22) Date de dépôt: 24.02.2011
(51) Int. Cl.: E03C 1/126, C02F 1/68

(54) **Système de traitement des eaux usées en provenance d'un dispositif d'utilisation d'eaux**
Anordung zur Behandlung von Abwasser enstanden in einem wasserverbrauchenden Gerät
System for treatment of wastewater originated from a water consuming device

(30) Priorité: 26.02.2010 FR 1051419
(43) Date de publication de la demande: 31.08.2011
(73) Titulaire: Eurobio S.A., 34000 Montpellier (FR)
(72) Inventeur: Maquis, Thierry, 34560 MONTBAZIN (FR)
(74) Mandataire: Thinat, Michel

(56) Documents cités:
- EP-A1- 1 347 106
- WO-A1-01/90494
- DE-A1- 2 100 795
- GB-A- 300 341
- GB-A- 2 259 850

## Description

L'invention concerne un système de traitement des eaux usées en provenance d'un dispositif d'utilisation d'eaux, selon le préambule de la revendication 1.

Un système de ce type est connu par le document DE 2 100 795.

Le système de traitement selon l'invention comporte les caractéristiques qui sont énoncées dans la partie caractérisante de la revendication 1.

D'autres caractéristiques font les objets de revendications dépendantes.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue latérale du dispositif injecteur selon l'invention, monté sur une portion d'une canalisation d'évacuation des eaux usées ;
- la figure 2 est une vue schématique de la partie centrale II de la figure 1 et montre le dispositif injecteur dans sa position fermée ; et
- la figure 3 est une vue similaire à la figure 2 mais montre le dispositif injecteur dans sa position ouverte.

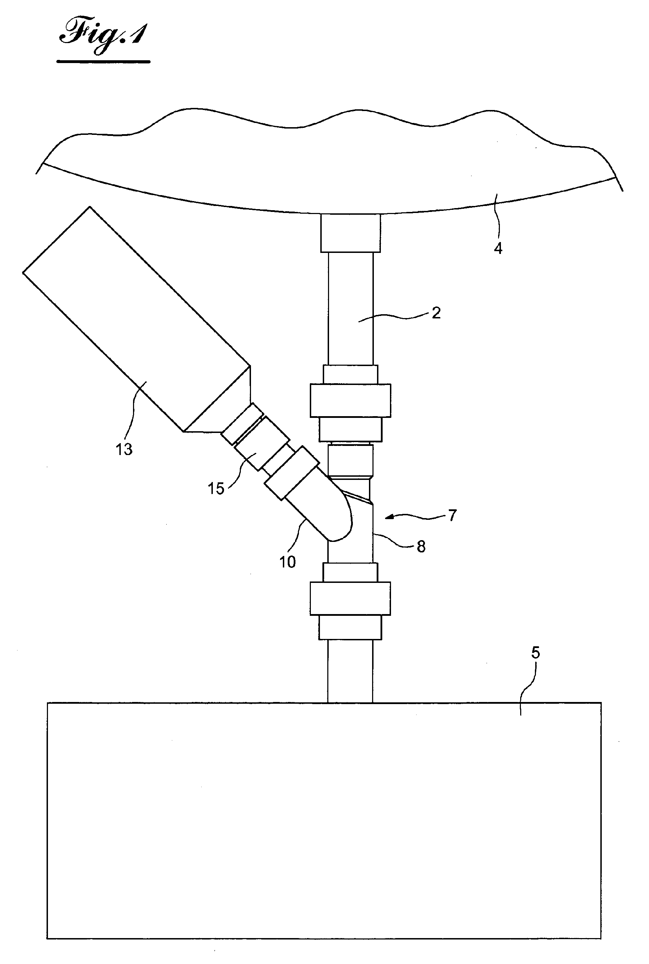

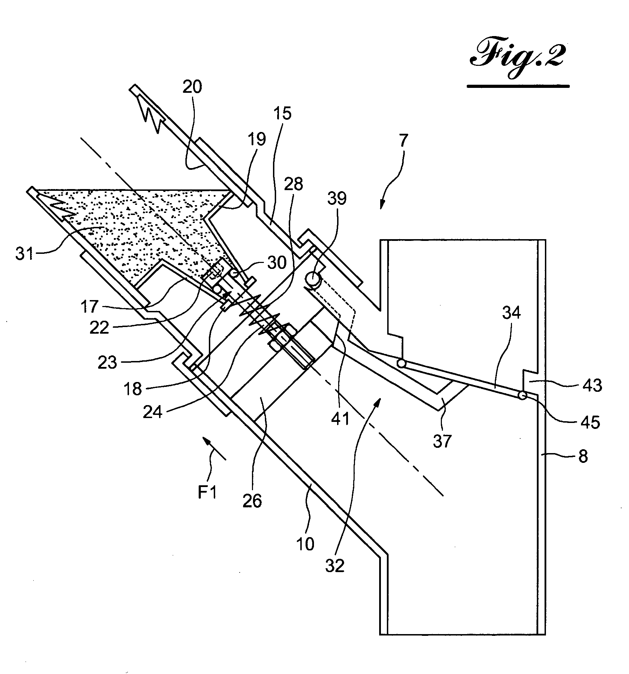

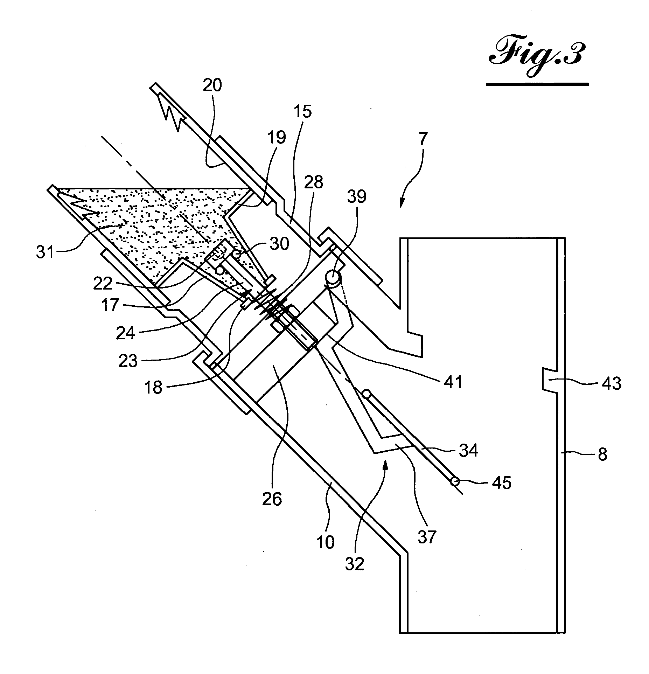

La figure 1 montre un système de traitement des eaux usées selon l'invention et essentiellement une canalisation d'évacuation 2 des eaux usées provenant d'un dispositif d'utilisation d'eau 4 tel qu'un évier ou lavabo, et qui conduit les eaux usées à une station ou micro-station 5 des eaux-usées, telle que par exemple un bac à graisse ou une fosse sceptique. La partie centrale de la figure illustre le dispositif d'injection dans la canalisation, ici en forme d'une conduite d'évacuation 2, de quantités prédéterminées d'un liquide de traitement chimique ou biologique, c'est-à-dire dans des eaux usées évacuées par la canalisation et provenant du dispositif d'utilisation 4. Le dispositif d'injection porte la référence 7 et est représenté de façon plus détaillée aux figures 2 et 3.

Comme il ressort de ces figures, le dispositif injecteur 7 comporte essentiellement un tronçon tubulaire 8 qui est monté dans la canalisation d'évacuation 2 et un tronçon 10 de tube d'injection de liquide de traitement dans les eaux usées, qui est raccordé au tronçon de tube de canalisation 8 en s'ouvrant dans celui-ci. Le tronçon de tube injecteur 10 est incliné vers le bas en direction du tronçon 8 de façon que son axe forme avec l'axe du tronçon 8 un angle α de par exemple environ 45°. Sur l'extrémité libre 11 de ce tronçon 10 est branché un récipient en forme d'une bouteille, qui contient du liquide de traitement, par l'intermédiaire d'un manchon tubulaire 15.

Dans ce manchon 15 est montée coaxialement une pièce creuse tubulaire, de forme tronconique 17, dont la paroi de sommet 18 est orientée vers le tronçon tubulaire de raccord 10. La paroi 18 est percée pour permettre le passage du liquide de traitement dans la canalisation 2. La base de la pièce tronconique 17 est repliée de façon à former une paroi radiale 19 qui est reliée de façon étanche à la surface intérieure 20 du manchon.

L'espace interne de la pièce tronconique 17 loge la tête 22 d'une vis 23 dont la tige 24 s'étend coxialement au manchon à travers la paroi de sommet 18 jusque dans la partie d'extrémité 27 du raccord 10. L'extrémité de la tige porte un élément en forme d'un galet de guidage 26. Ce galet est engagé dans la partie d'extrémité 27 du raccord 10. Un ressort hélicoïdal de compression 28 est interposé entre la face extérieure de la paroi de sommet 18 de la pièce tronconique 17 et le galet de guidage 26. La vis 23 étant axialement mobile, le ressort 28 repoussant le galet de guidage 26 en direction du tronçon de tube d'évacuation 10 force la tête 22 de la vis dans une position où un joint torique 30 situé à la base de la tête est en application étanche contre la face interne de la pièce tronconique. Ainsi, la tête 22 avec le joint torique 30 constitue un clapet d'étanchéité dont le siège est formé par la paroi de la pièce tronconique 18 et qui est déplaçable à l'encontre du ressort 28 entre une position de fermeture et une position d'ouverture représentées respectivement aux figures 2 et 3, par déplacement du galet de guidage 26.

Par conséquent, l'ouverture du clapet permet au liquide indiqué en 31 qui se trouve dans le manchon au-dessus de la pièce 17 et provenant de la bouteille 13 de s'écouler à travers la paroi de sommet 18, dans le raccord 10 et ainsi dans le tronçon tubulaire 8 de la canalisation d'évacuation 2.

L'actionnement du galet est effectué par un mécanisme 32 sous l'effet de l'écoulement d'eaux usées dans la canalisation d'évacuation 2. Ce mécanisme comprend un battant 34 qui est monté dans le tronçon de canalisation 8 juste au-dessus du raccord 10, c'est-à-dire dans la partie d'arrivée des eaux usées. Le battant est déplaçable entre une position de fermeture du tronçon représentée à la figure 2 et une position d'ouverture montrée à la figure 3. Le pivotement du battant 34 est transmis par un levier 37 au galet de guidage 26. Une extrémité du levier est fixe en 38 au centre du battant, tandis que l'autre extrémité est articulée à un axe 39 situé dans la partie d'extrémité 27 du raccord 10 au-dessus du galet.

Le levier 37 est configuré de façon qu'il présente une partie coudée 41 en dessous de la portion périphérique correspondante du galet 26, qui forme une rampe s'étendant en direction de l'axe du galet, de façon que, lors d'un pivotement du clapet vers sa position d'ouverture, la rampe déplace le galet axialement en direction de la flèche F1, ce qui provoque le soulèvement de la tête 22 de la vis et l'écoulement du liquide présent dans la pièce tronconique 17 et au-dessus de celui-ci dans le manchon, dans la canalisation d'évacuation 2.

Etant donné qu'à l'état de repos du dispositif injecteur, le galet 26 est en appui contre la rampe 41 du levier d'actionnement 37, le battant 34 est maintenu par le ressort 39 dans sa position de fermeture dans laquelle il est en appui contre une butée 43 prévue sur la face interne du tronçon de canalisation 8. Un joint torique 45 est prévu à la périphérie du battant 34.

En raison de cette structure du dispositif d'injection 7, le battant 34 du tronçon de canalisation 8 est normalement fermé et il n'est forcé à s'ouvrir que sous l'effet d'un écoulement d'eaux usées en provenance du dispositif d'utilisation. L'ouverture du battant 34 provoque, par l'intermédiaire du mécanisme de transmission 32 et le galet 26, le soulèvement de la tête 22 formant clapet d'étanchéité, de la vis 23 et l'écoulement du liquide dans le tronçon de canalisation. Lorsque l'écoulement des eaux usées cesse, le battant 34 est ramené par le galet de guidage 26, sous l'effet du ressort 39, dans sa position initiale de fermeture. En même temps, le ressort 39 force la tête 22 de la vis 23 de reprendre sa position de fermeture, ce qui met fin au débit du liquide de traitement. Ainsi, le dispositif 7 agit comme dispositif d'injection d'une quantité prédéterminée de liquide de traitement, en fonction de l'écoulement des eaux usées. Le liquide de traitement est choisi, bien entendu, en fonction de la nature des eaux usées et de l'application de l'invention. Il peut être un liquide chimique ou biologique, tel qu'un liquide bactéricide, désinfectant, déboucheur, parfum ou analogue.

L'invention est applicable à de multiples systèmes, par exemple des fosses toutes eaux ou des fosses sceptiques. Bon nombre d'activateurs biologiques liquides existent sur le marché afin d'entretenir les fosses sceptiques sujettes à des fortes variations de charges (fréquentation irrégulière, résidence secondaire ou analogue) impliquant des colmatages ou des remontées de mauvaises odeurs. Le dispositif injecteur selon l'invention raccordé au pied d'un évier ou lavabo et relié à la fosse sceptique permettra, lors de chaque utilisation du point d'eau, d'injecter une quantité appropriée le produit adapté.

L'invention est aussi parfaitement applicable à des micro-stations d'épuration pour l'assainissement non collectif. De la même manière que pour les fosses sceptiques, les particuliers en zone rurale peuvent être amenés à installer une micro-station d'épuration visant à épurer les effluents domestiques. Ces micro-stations d'épuration peuvent nécessiter l'adjonction de produits activateurs biologiques ou chimiques afin d'optimiser leur fonctionnement. Le dispositif injecteur selon l'invention raccordé au pied d'un évier ou lavabo relié à la micro-station permettra, lors de chaque utilisation du point d'eau, d'injecter le produit adapté.

L'invention est aussi utilisable avantageusement pour des bacs à graisses de restauration collective. En effet, les restaurants ont obligation d'installer un bac à graisses afin de retenir les graisses issues de leur activité et ainsi éviter leur départ dans les réseaux car elles provoquent bon nombre de désagréments (colmatages, corrosion, mauvaises odeurs, surcharge de pollution pour la station d'épuration en aval, par exemple). Afin de limiter l'intervention de camions de vidange qui doivent régulièrement pomper cette graisse retenue, des produits biologiques à base de bactéries et/ou nutriments peuvent être injectés dans le cas de l'invention dans les eaux usées, à la place de pompes doseuses, essentiellement de type péristaltique, utilisées à ce jour et qui nécessitent des investissements ou entretiens importants pour des petits restaurateurs.

De façon générale, l'invention peut être utilisée dans le cas de canalisations d'évacuation d'eaux usées qui sont sujettes à l'accumulation de matière organique impliquant des colmatages et des remontées d'odeurs. Toute installation peut être concernée, surtout les établissements ou les particuliers qui ne possèdent pas de bacs à graisses ou fosses sceptiques et pour lesquels l'investissement d'un équipement sophistiqué n'est pas justifié. L'utilisation d'un dispositif d'injection selon l'invention économique et facile à mettre en place est accessible à tous établissements et particuliers.

Bien entendu, la description de l'invention n'a été donnée qu'à titre d'exemple et de diverses modifications peuvent être envisagées sans sortir du cadre de l'invention telle que définie par les revendications annexées. Ainsi, par exemple, le mécanisme de transmission peut être réalisé autrement. On pourrait envisager de monter le battant de façon pivotante dans le tronçon de canalisation et de relier le battant au galet par une simple biellette de transmission du mouvement de pivotement au galet qui se déplacerait alors axialement dans le tronçon de raccord. Le clapet d'étanchéité permettant l'écoulement du liquide de traitement dans le tronçon de canalisation, sous l'effet d'un écoulement d'eaux usées, peut également être réalisée de toute autre façon appropriée.

## Revendications

1. Système de traitement des eaux usées en provenance d'un dispositif d'utilisation d'eau, comprenant une canalisation (2) d'évacuation des eaux usées en écoulement gravitaire, et un dispositif (7) d'injection dans les eaux usées d'une quantité d'un liquide de traitement chimique ou biologique, à chaque écoulement d'eaux usées, qui comprend un tronçon tubulaire (10) de raccord à la canalisation d'évacuation (2) d'une source de produit de traitement et des moyens de clapet (22) déplaçables entre une position d'ouverture et de fermeture d'un passage d'écoulement de produit de traitement dans la canalisation d'évacuation, et commandés à l'ouverture par un écoulement d'eaux usées, **caractérisé en ce que** le dispositif d'injection (7) comprend un mécanisme d'actionnement (32) des moyens de clapet (22), qui comportent un battant (34) monté dans ladite canalisation d'évacuation, déplaçable par un écoulement d'eaux usées entre une position dans laquelle les moyens de clapet (22) sont fermés et une position d'ouverture de ces moyens.

2. Système selon la revendication 1, **caractérisé en ce que** le dispositif d'injection (7) comprend un tronçon de conduite (8) destiné à être monté dans la canalisation d'évacuation (2), et dans lequel s'ouvre le tronçon de raccord (10), et un battant (34) qui est déplaçable entre une position de fermeture et d'ouverture du tronçon de conduite (8), un mécanisme (32) d'actionnement du clapet (22) étant associé au battant (34) de façon que l'ouverture du battant provoque l'ouverture du clapet.

3. Système selon la revendication 2, **caractérisé en ce qu'**au clapet (22) est associé un ressort (28) de rappel du clapet dans sa position de fermeture et **en ce que** ce ressort (28) sert de moyen de rappel du battant (34) dans sa position de fermeture, par l'intermédiaire du mécanisme de transmission (32).

4. Système selon la revendication 3, **caractérisé en ce qu'**un organe (26) est solidaire en déplacement du clapet (22) et **en ce que** le mécanisme de transmission (32) comprend un élément (37) qui est relié à une extrémité au battant (34) et comporte des moyens de déplacement dudit organe, à l'encontre du ressort de rappel (18) associé au clapet (22).

5. Système selon la revendication 4, **caractérisé en ce que** l'élément de transmission (32) est en forme d'un levier qui est monté pivotant dans le tronçon de raccord (10), au-dessus de l'organe (26) et qui comporte une partie en forme d'une rampe (41) en appui sous l'organe interne (6) à un emplacement de la face qui est opposée à la face sur laquelle agit le ressort de rappel (28).

6. Système selon la revendication 4, **caractérisé en ce que** le battant (34) du tronçon de conduite (10) est monté pivotant dans celui-ci et **en ce que** l'élément de transmission (37) est relié à une extrémité au battant (34) et articulé à son autre extrémité à l'organe (26) solidaire du clapet (22).

## Patentansprüche

1. System zur Behandlung der Abwässer aus einer Wasserverwendungsvorrichtung, das eine Ableitungskanalisation (2) der Abwässer durch Schwerkraftabfluss umfasst, und eine Einleitungsvorrichtung (7) einer Menge einer chemischen oder biologischen Behandlungsflüssigkeit in die Abwässer bei jedem Abfließen von Abwässern, die einen Verbindungs-Rohrstutzen (10) an die Ableitungskanalisation (2) einer Behandlungsproduktquelle und Klappenventilmittel (22) umfasst, die zwischen einer geöffneten und einer geschlossenen Stellung eines Behandlungsproduktfließdurchgangs in die Ableitungskanalisation verlagerbar sind und deren Öffnung durch ein Fließen von Abwässern befohlen wird, **dadurch gekennzeichnet, dass** die Einleitungsvorrichtung (7) einen Betätigungsmechanismus (32) der Klappenventilmittel (22) umfasst, der einen Flügel (34) aufweist, der in der Ableitungskanalisation montiert ist, der durch ein Fließen von Abwässern zwischen einer Stellung, in der die Klappenventilmittel (22) geschlossen sind, und einer geöffneten Stellung dieser Mittel verlagerbar ist.

2. System nach Anspruch 1, **dadurch gekennzeichnet, dass** die Einleitungsvorrichtung (7) einen Leitungsstutzen (8) umfasst, der dazu bestimmt ist, in der Ableitungskanalisation (2) montiert zu sein und in dem sich der Verbindungsstutzen (10) öffnet, und einen Flügel (34), der zwischen einer geöffneten und einer geschlossenen Stellung des Leitungsstutzens (8) verlagerbar ist, wobei ein Betätigungsmechanismus (32) des Klappenventils (22) dem Flügel (34) derart zugeordnet ist, dass die Öffnung des Flügels die Öffnung des Klappenventils verursacht.

3. System nach Anspruch 2, **dadurch gekennzeichnet, dass** dem Klappenventil (22) eine Rückstellfeder (28) des Klappenventils in seine geschlossene Stellung zugeordnet ist und dass diese Feder (28) als Rückstellmittel des Flügels (34) in seine geschlossene Stellung über den Übertragungsmechanismus (32) dient.

4. System nach Anspruch 3, **dadurch gekennzeichnet, dass** ein Organ (26) mit dem Klappenventil (22) in Verlagerung verbunden ist und dass der Übertragungsmechanismus (32) ein Element (37) umfasst, das mit einem Ende am Flügel (34) verbunden ist und Verlagerungsmittel des Organs gegen die dem Klappenventil (22) zugeordnete Rückstellfeder (18) aufweist.

5. System nach Anspruch 4, **dadurch gekennzeichnet, dass** das Übertragungselement (32) die Form eines Hebels hat, der schwenkbar im Verbindungsstutzen (10) über dem Organ (26) montiert ist und der einen rampenförmigen Abschnitt (41) aufweist, der sich unter dem internen Organ (6) an einer Stelle der Seite abstützt, die der Seite gegenüberliegt, auf die die Rückstellfeder (28) wirkt.

6. System nach Anspruch 4, **dadurch gekennzeichnet, dass** der Flügel (34) des Leitungsstutzens (10) schwenkbar in diesem montiert ist und dass das Übertragungselement (37) mit einem Ende am Flügel (34) verbunden ist und an seinem anderen Ende an dem Organ (26) angelenkt ist, das mit dem Klappenventil (22) verbunden ist.

## Claims

1. A system for treating wastewater originated from a water consuming device, comprising a channel (2) for discharging the wastewater by gravitational flow, and a device (7) for injecting a quantity of a chemical or biological treatment liquid into the wastewater, upon each flow of wastewater, that comprises a tubular segment (10) for connecting a treatment product source to the discharge duct (2) and comprises valve means (22) movable between a position opening and closing a passage for the flow of a treatment product in the discharge duct, and commanded to open by a flow of wastewater, **characterized in that** the injection device (7) comprises a mechanism (32) for actuating the valve means (22), which include a hinge (34) mounted in said discharge duct, movable by a flow of wastewater between a position in which the valve means (22) are closed and an open position of said means.

2. The system according to claim 1, **characterized in that** the injection device (7) comprises a conduit segment (8) designed to be mounted in the discharge duct (2), and in which the connector segment (10) opens, and a hinge (34) that is movable between a closed position and an open position of the conduit segment (8), a mechanism (32) for actuating the valve (22) being associated with the hinge (34) such that opening the hinge causes opening of the valve.

3. The system according to claim 2, **characterized in that** the valve (22) is associated with a spring (28) for returning the valve to the closed position thereof and **in that** said spring (28) serves as means for returning the hinge (34) to its closed position, using the transmission mechanism (32).

4. The system according to claim 3, **characterized in that** a member (26) is secured in the movement to the valve (22) and **in that** the transmission mechanism (32) comprises an element (37) that is connected to one end of the hinge (34) and includes means for moving said member, against the return spring (18) associated with the valve (22).

5. The system according to claim 4, **characterized in that** the transmission element (32) is in the form of a lever that is pivotably mounted in the connecting segment (10), above the member (26), and which includes a portion in the form of a ramp (41) bearing below the inner member (6) in a location of the face that is opposite the face on which the return spring (28) acts.

6. The system according to claim 4, **characterized in that** the hinge (34) of the conduit segment (10) is pivotably mounted therein and **in that** one end of the transmission element (37) is connected to the hinge (34) and the other end is connected to the member (26) secured to the valve (22).
